# EUROPÄISCHE PATENTSCHRIFT

(11) **EP 2 157 666 B1**
(45) Veröffentlichungstag und Bekanntmachung des Hinweises auf die Patenterteilung: **09.01.2013**
(21) Anmeldenummer: 09100351.7
(22) Anmeldetag: 01.07.2009
(51) Int. Cl.: H01Q 21/06, G10K 11/34, G01S 7/52, B06B 1/06, B06B 1/08

(54) **Sensoranordnung**
Sensor assembly
Dispositif de détection

(30) Priorität: 19.08.2008 DE 102008041356
(43) Veröffentlichungstag der Anmeldung: 24.02.2010
(73) Patentinhaber: Robert Bosch GmbH, 70442 Stuttgart (DE)
(72) Erfinder: Streichert, Felix, 70173 Stuttgart (DE); Zott, Christian, 74321 Bietigheim-Bissingen (DE); Brown, Christopher, 70437 Stuttgart (DE)

(56) Entgegenhaltungen:
- US-A- 4 967 077
- US-B1- 6 433 754
- US-B1- 6 725 012
- John Conway: "Observing Efficiency of a Strawperson Zoom Array" ALMA Memo 283 5. Januar 2000 (2000-01-05), XP007910369 Gefunden im Internet: URL:http://www.alma.nrao.edu/memos/html-me mos/alma283/memo283.pdf> [gefunden am 2009-10-30]
- CONWAY J: "A Comparison of Zoom Arrays with Circular and Spiral Symmetry" INTERNET CITATION 12. April 1999 (1999-04-12), Seiten 1-15, XP007910331 Gefunden im Internet: URL:http://www.alma.nrao.edu/memos/html-me mos/abstracts/abs260.html> [gefunden am 2009-10-28]
- SILLER H ET AL: "Buzz-Saw noise spectra and directivity from flyover tests" 8TH AIAA/CEAS AEROACOUSTICS CONFERENCE,, 19. Juni 2002 (2002-06-19), Seiten 1-6, XP007910357
- AUSTENG A ET AL: "SPARSE 2-D ARRAYS FOR 3-D PHASED ARRAY IMAGING-DESIGN METHODS" IEEE TRANSACTIONS ON ULTRASONICS, FERROELECTRICS AND FREQUENCY CONTROL, IEEE, US, Bd. 49, Nr. 8, 1. August 2002 (2002-08-01) , Seiten 1073-1086, XP001212413 ISSN: 0885-3010

## Beschreibung

### Stand der Technik

Die Erfindung geht aus von einer Sensoranordnung nach dem Oberbegriff von Anspruch 1.

Sensoranordnungen mit phasenempfindlichen Sensorelementen zum Detektieren von Objekten mit Hilfe einer aus einem Objektfeld empfangenen Wellenstrahlung sind bekannt. Hierbei werden die Signale der Sensorelemente derart ausgewertet, dass Strahlungsquellen bzw. Objekte, die die von einer Strahlungsquelle erzeugte Strahlung reflektieren, detektiert werden und ggf. ein Bild der Szene des Objektfelds rekonstruiert werden kann.

Bei der Auslegung solcher Sensoranordnungen sind an sich widerstreitende Anforderungen zu erfüllen: So soll einerseits die Winkelauflösung möglichst hoch sein und dafür die Breite der Hauptkeule (Main Lobe) möglichst gering sein, was eine möglichst ausgedehnte Sensoranordnung erfordert. Ein günstiges Signal-Rausch-Verhältnis, d. h., niedrige Nebenkeulen (Side Lobes), kann durch das Vorsehen möglichst vieler Sensorelemente erzielt werden. Diese sollen möglichst dicht angeordnet sein, insbesondere in Abständen, die kleiner als die halbe Wellenlänge der empfangenen Strahlung sind, um unerwünschte Geisterbilder (Grating Lobes) zu vermeiden; dies kann aber aufgrund der Ausdehnung der einzelnen Sensorelemente an eine Grenze stoßen. Schließlich soll aus Kostengründen die Zahl der Sensorelemente begrenzt bleiben, auch der zur Verfügung stehende Raum ist zumeist begrenzt.

In DE 44 28 500 A1 wird deshalb ein rechteckiges Ultraschallwandlerarray mit in Zeilen und Spalten angeordneten Wandlerelementen vorgeschlagen, bei dem die Abstände benachbarter Zeilen und Spalten mit zunehmendem Abstand von einem Symmetriezentrum monoton nach außen zunehmen. Hierdurch kann die Zahl der notwendigen Wandlerelemente gegenüber einem Array mit gleichmäßiger Belegung reduziert werden, ohne dass ein wesentlicher Qualitätsverlust eintritt.

Gemäß US 2,837,728 nehmen bei einer kreisförmigen Senderanordnung für die Abstrahlung von akustischer Energie, bei der die Senderelemente auf konzentrischen Kreisen um ein Symmetriezentrum angeordnet sind, die Abstände benachbarter Kreise mit zunehmendem Abstand vom Symmetriezentrum gemäß einer einfachen Formel zu. Hierdurch wird eine eng entlang der Achse der Senderanordnung konzentrierte Sendecharakteristik erreicht. Ausgehend von der gegebenen Formel kann durch willkürliche Veränderung der genannten Abstände und nachfolgende Berechnung der Eigenschaften des Arrays eine weitere Verbesserung der Abstrahlcharakteristik erreicht werden.

Weiterhin ist aus der Publikation Siller H. et al: "Buzz-Saw noise spectra and directivity from flyover tests", 8th AIAA/CEAS Aeroacoustics Conference, 19. Juni 2002 (2002-06-19), Seiten 1 - 6 eine Anordnung von Mikrofonen bekannt, die der Analyse und Detektion von Überflugschall durch Verkehrsflugzeuge dient.

Weiterhin ist aus der Publikation Austeng A. et al: "Sparse 2-D Arrays for 3-D Phased Array Imaging-Design Methods", IEEE Transactions on Ultrasonics, Ferroelectrics and Frequency Control, IEEE, US, Bd. 49, Nr. 8, 1. August 2002 (2002-08-01), Seiten 1073 - 1086 die Anwendung ultraschallbasierter Sensor-Arrays in medizinisch-diagnostischen Anwendungen bekannt.

### Offenbarung der Erfindung

### Vorteile der Erfindung

Die erfindungsgemäße Sensoranordnung mit den Merkmalen des Anspruchs 1 hat demgegenüber den Vorteil, dass eine Empfangscharakteristik erzielt wird, die zur Detektion von Objekten in unterschiedlichen Richtungen eine hohe Winkelauflösung und ein hohes Signal-Rausch-Verhältnis aufweist und Geisterbilder vermeidet, wobei nur eine vergleichsweise geringe Zahl von Sensorelementen benötigt wird. Darüber hinaus ist die Zahl der Parameter für eine weitere Optimierung geringer, so dass eine zielgerichtete Optimierung möglich ist.

Die erfindungsgemäße Sensoranordnung umfasst eine Mehrzahl von Sensorelementen zur Detektion einer einfallenden Wellenstrahlung. Die Wellenstrahlung kann Ultraschall in Luft oder in einem anderen Medium sein. Die Strahlung wird von einer oder mehreren, der Sensoranordnung zugeordneten Strahlungsquellen erzeugt. Diese strahlen bevorzugt in einen breiten Raumwinkelbereich ab, um ein Objektfeld auszuleuchten, in dem Objekte aufgrund der von ihnen reflektierten Strahlung detektiert werden sollen. Die Strahlung kann als kontinuierliche oder auch als gepulste Strahlung erzeugt werden, wobei gepulste Strahlung zusätzlich eine laufzeitbasierte Entfernungsbestimmung der im Objektfeld detektierten Objekte ermöglicht.

Die Sensorelemente sind phasensensitiv, so dass bei der Auswertung der Signale der Sensorelemente in bekannter Weise eine Überlagerung unter Einbeziehung der jeweiligen Phasenbeziehungen erfolgen kann; diese Art der Signalverarbeitung wird auch als "Beamforming" bezeichnet. Die Sensorelemente weisen jeweils eine Empfangscharakteristik auf, die für alle Sensorelemente die gleiche ist oder auch unterschiedlich sein kann. Insbesondere hat jedes Sensorelement bevorzugt eine breite Empfangscharakteristik, um Objekte aus unterschiedlichen Richtungen, auch in großem Winkelabstand zu einer Achse der Sensorelemente, detektieren zu können. Jedes Sensorelement weist einen Mittelpunkt auf, der beispielsweise der geometrische Mittelpunkt der Sensorfläche sein kann, aber auch einen anderen, für die Empfangseigenschaften des Sensorelementes wesentlichen Punkt bezeichnen kann. Die Sensorelemente können untereinander jeweils gleiche Größe, Form und Empfangseigenschaften aufweisen, können aber auch unterschiedlich ausgebildet sein.

Die Sensorelemente sind erfindungsgemäß in oder nahe einer Ebene angeordnet, wobei Abweichungen von der Ebene beispielsweise durch die Gestalt und Befestigung der Sensorelemente bedingt sein können. Sofern die Mittelpunkte der Sensorelemente von der Ebene abweichen, ist im Folgenden jeweils die Projektion auf die Ebene gemeint; sofern die Abweichungen von der Ebene nicht im Vergleich zur Wellenlänge der empfangenen Strahlung vernachlässigbar sind, können diese bei der Signalauswertung kompensiert werden. Anstelle einer geometrischen Ebene können die Sensorelemente, je nach Anwendungsfall bzw. geometrischen Bedingungen am Anbringungsort, auch in einer leicht gewölbten Fläche angeordnet sein.

Erfindungsgemäß ist erkannt worden, dass sich mit einer N-zählig radiärsymmetrischen Anordnung von Sensorelementen, wobei die ganze Zahl N > 2 ist, auf besonders einfache Weise eine vorteilhafte Empfangscharakteristik erreichen lässt. Unter N-zähliger Radiär- oder Radialsymmetrie wird eine Form der Symmetrie verstanden, bei der eine räumliche geometrische Figur durch Drehung um eine Symmetrieachse bzw. eine ebene geometrische Figur durch Drehung um ein Symmetriezentrum um einen Winkel von 360°/N in sich selbst übergeht. Gegenüber einer gleichmäßigen Belegung der gleichen Fläche mit Sensorelementen ist erfindungsgemäß deshalb eine weitaus geringere Anzahl von Sensorelementen notwendig, ohne dass sich Winkelauflösung und Signal-Rausch-Verhältnis wesentlich verschlechtern oder Geisterbilder auftreten. Hierdurch ist eine kostengünstigere Herstellung einer geeigneten Sensoranordnung möglich.

Insbesondere ist es vorteilhaft, wenn N ungerade ist. Eine ungeradzählige Radiärsymmetrie ermöglicht auch mit relativ wenigen Sensorelementen eine besonders günstige Empfangscharakteristik. Wenn die Zahl der Sensorelemente eng begrenzt ist, sind insbesondere niedrige Werte von N vorteilhaft, beispielsweise N = 3 oder N = 5 .

Aufgrund der N-zähligen Radiärsymmetrie sind die Sensorelemente auf Kreisen um das Symmetriezentrum angeordnet, wobei auf jedem Kreis mit von Null verschiedenem Radius mindestens N Sensorelemente vorhanden sein müssen. Insbesondere ist es vorteilhaft, wenn die Sensorelemente auf mindestens zwei konzentrischen Kreisen um das Symmetriezentrum angeordnet sind, wobei auf dem oder den inneren Kreisen jeweils N Sensorelemente und auf dem äußeren Kreis mehr als N Sensorelemente vorhanden sind, beispielsweise 2 N oder 3 N Sensorelemente. Diese können mit ihren jeweiligen Mittelpunkten genau auf dem äußeren Kreis angeordnet sein oder auch von dem äußeren Kreis nach innen oder außen um einen Betrag versetzt sein, der geringer ist als die Hälfte des Abstands zum nächstinneren Kreis, beispielsweise kleiner als die halbe Außenabmessung eines Sensorelements selbst. Wenn die Zahl der zur Verfügung stehenden Sensorelemente begrenzt ist, kann hierdurch bereits eine nahezu optimale Anordnung der Sensorelemente erzielt werden.

Darüber hinaus ist es vorteilhaft, wenn die Sensorelemente benachbarter Kreise jeweils zueinander versetzt angeordnet sind. In diesem Fall können die einander benachbarten Kreise enger aneinander angeordnet werden, als es einer vorgegebenen geometrischen Ausdehnung der Sensorelemente entspricht. Hierdurch kann eine weitere Verbesserung der Empfangseigenschaften erzielt werden.

Weiterhin ist es bevorzugt, dass die Anordnung der Mittelpunkte der Sensorelemente nicht spiegelsymmetrisch bezüglich einer in der Ebene liegenden Symmetrieachse ist. So ist es insbesondere vorteilhaft, wenn bei Anordnung von N ersten Sensorelementen auf einem ersten Kreis, dessen Mittelpunkt des Symmetriezentrum bildet, und wenn N weitere Sensorelemente auf einem weiteren konzentrischen Kreis angeordnet sind, die weiteren Sensorelemente nicht jeweils entlang vom Symmetriezentrum ausgehenden Strahlen durch die ersten Sensorelemente positioniert sind, und auch nicht entlang der Winkelhalbierenden zwischen zwei solchen Strahlen. Stattdessen sind die weiteren Sensorelemente um einen Winkel gegenüber diesen Strahlen versetzt, der nicht 360°/N und auch nicht 360°/(2N) beträgt, sondern beispielsweise im Bereich zwischen 0° und 360°/(2N) liegt. Dies bedeutet, dass der Ring, den die N weiteren Sensorelemente bilden, gegenüber dem von den N ersten Sensorelementen gebildeten Ring um einen solchen Winkel verdreht ist. In analoger Weise kann auch bei Belegung eines Kreises mit mehr als N Sensorelementen eine nicht-spiegelsymmetrische Anordnung erhalten werden. Auf diese Weise erhält man mit einer einfachen Anordnung besonders vorteilhafte Empfangseigenschaften.

Darüber hinaus ist es vorteilhaft, zumindest einige der Sensorelemente möglichst dicht anzuordnen. Hierdurch können Mehrdeutigkeiten bei der Bilderzeugung (Geisterbilder), insbesondere Beugungsbilder (Grating Lobes), vermieden werden. Die Sensorelemente haben jedoch eine flächige Ausdehnung, insbesondere können die Sensorelemente größer sein als die eigentliche, für die einfallende Strahlung empfindliche Empfangsfläche, da beispielsweise mechanische oder elektrische Halterungs- bzw. Verbindungselemente notwendig sind. Die Sensoren weisen somit eine Sensorfläche auf, die gleich der jeweiligen Empfangsfläche oder größer als diese sein kann, und die sich mit der benachbarter Sensorelemente nicht, oder zumindest nicht in einem wesentlichen Maße, überlappen darf. Diese Sensorfläche kann beispielsweise kreisförmig, rechteckig oder auch dreiecksförmig sein. Gemäß einer bevorzugten Ausführungsform der Erfindung sind die Sensorelemente derart angeordnet, dass sich zumindest einige Sensorelemente berühren oder, um Raum für Fertigungstoleranzen zu lassen, nahezu berühren; im Folgenden wird deshalb auch dann von "Berührung" gesprochen, wenn ein durch Toleranzen bedingter geringer Abstand zwischen den Sensorelementen verbleibt, beispielsweise ca. 0,2 mm. Die Berührung kann, je nach Form der Sensorfläche und Anordnung der Sensorelemente, insbesondere punktförmig sein, kann aber auch beispielsweise linienartig sein.

Als besonders vorteilhaft hat sich herausgestellt, wenn zusätzlich zumindest ein Sensorelement von keinem anderen Sensorelement berührt wird. Die hierdurch erzielte ungleichmäßige Flächenbelegung ermöglicht besonders günstige Empfangseigenschaften.

Im Symmetriezentrum kann auch ein Sensorelement angeordnet sein. Es ist jedoch bevorzugt, wenn sich im Symmetriezentrum kein Sensorelement befindet. In diesem Fall kann stattdessen eine Mehrzahl von Sensorelementen, insbesondere N Sensorelemente, nahe dem Symmetriezentrum angeordnet sein. Hierdurch wird häufig eine bessere Empfangscharakteristik erzielt, als wenn sich direkt im Symmetriezentrum ein Sensorelement befindet. Dies gilt insbesondere dann, wenn die N Sensorelemente näher am Symmetriezentrum angeordnet sind, als das selbst bei Berührung der Sensorelemente möglich wäre, wenn sich im Symmetriezentrum ein Sensorelement befände.

Insbesondere ist es bevorzugt, wenn in dem Fall, dass mehr als N Sensorelemente entlang eines Kreises angeordnet sind, in dessen Mittelpunkt das Symmetriezentrum steht, dieser Kreis mit den Sensorelementen ungleichmäßig belegt ist. Dies bedeutet, dass der vom Symmetriezentrum gesehene Winkelabstand zwischen zwei benachbarten Sensorelementen auf dem Kreis nicht zwischen allen Sensorelementen auf dem Kreis derselbe ist, sondern dass Lücken und dichter belegte Bereiche entstehen. Auch hier können die Mittelpunkte der Sensorelemente von dem Kreis geringfügig, beispielsweise im Rahmen der Sensorfläche, abweichen. Hierdurch kann eine besonders günstige Empfangscharakteristik erzielt werden.

Besonders bevorzugt ist es, wenn die Sensorelemente in untereinander ähnlichen Gruppen angeordnet sind, die jeweils eine Mehrzahl von Sensorelementen umfassen, die innerhalb einer Gruppe dicht oder nahezu dicht angeordnet sind, so dass sich ihre Flächen berühren oder nahezu berühren, während die radiärsymmetrisch angeordneten Gruppen untereinander beabstandet sind. Die hierdurch erzeugte unterschiedliche Belegungsdichte der für die Sensoranordnung zur Verfügung stehenden Fläche mit Sensorelementen ermöglicht bei der Bildrekonstruktion ein besonders hohes Signal-Rausch-Verhältnis, d. h., niedrige Side Lobes, bei einer guten Winkelauflösung.

Weiterhin ist es vorteilhaft, wenn jeweils K Sensorelemente, wobei K größer als 1 ist, entlang spiralförmiger Linien angeordnet sind, wobei wegen der N-zähligen Radiärsymmetrie N spiralförmige Linien vorhanden sind. Die K Sensorelemente können dabei insbesondere dicht gepackt sein, d. h., die Flächen der Sensorelemente berühren sich oder berühren sich nahezu. Die Flächen der Sensorelemente bilden dann N Spiralarme, die vom Symmetriezentrum auszugehen scheinen. Eine solche Anordnung ermöglicht besonders vorteilhafte Empfangseigenschaften.

Während die Mittelpunkte der Sensorelemente erfindungsgemäß eine radiärsymmetrische Figur bilden, muss dies für die Sensorelemente selbst nicht unbedingt gelten. So kann es beispielsweise günstig sein, etwa zur Vereinfachung der Kabelführung oder der Montierung, rechteckförmige Sensorelemente mit zueinander parallelen Kanten anzuordnen. Dies kann insbesondere dann vorteilhaft sein, wenn die Sensorelemente kleiner als die halbe Wellenlänge sind, so dass keine dichtgepackte Anordnung notwendig ist, um eine optimale Empfangscharakteristik zu erzielen. In diesem Fall können die Sensorelemente in solchem Abstand zueinander angeordnet werden, dass die Orientierung der einzelnen Sensorelemente unabhängig von deren Anordnung erfolgen und sich nach anderen Gesichtspunkten richten kann.

Eine erfindungsgemäße Sensoranordnung kann in einem Sensorsystem eingesetzt werden, das neben der Sensoranordnung einen Träger mit einer im Wesentlichen ebenen Fläche zur Aufnahme der Sensorelemente der Sensoranordnung umfasst, sowie eine mit den Sensorelementen für die Übertragung von Signalen elektrisch verbundene Auswerteeinrichtung zur Auswertung der von den Sensorelementen erzeugten Signale und damit zur Rekonstruktion eines Bilds der Szene des Objektfelds. Ein solches Sensorsystem kann ferner eine oder mehrere Strahlungsquellen zur Erzeugung der von den Sensorelementen detektierten Wellenstrahlung umfassen. Die Sensorelemente können auch als Transceiver ausgebildet sein und damit selbst als Strahlungsquellen verwendbar sein, so dass die Sensoranordnung auch zur Erzeugung einer Wellenstrahlung dienen kann. In diesem Fall ermöglicht die erfindungsgemäße Anordnung eine vorteilhafte Abstrahlcharakteristik mit einer schmalen Hauptkeule und mit einer niedrigen Strahlungsintensität außerhalb der Hauptkeule, wobei die Hauptkeule durch entsprechende Ansteuerung der Transceiver in einen breiten Winkelbereich richtbar ist.

Eine erfindungsgemäße Sensoranordnung bzw. ein diese umfassendes Sensorsystem wird bei Ultraschall- gestützten Parkassistenzsystemen eingesetzt werden.

Deshalb kann es wünschenswert sein, ausgehend von einer der beschriebenen Sensoranordnungen, durch bekannte uni-kriterielle oder multi-kriterielle Optimierungsverfahren weitere Varianten zu gewinnen. Optimierungskriterien können hierfür insbesondere ein schmaler Main Lobe, niedrige Side Lobes und/oder das Fehlen von Grating Lobes sein, die je nach Anwendung gewichtet werden; Nebenbedingungen sind beispielsweise eine vorgegebene maximale Anzahl von Sensorelementen, die Fläche der Sensorelemente selbst sowie die maximal zur Verfügung stehende Fläche der Sensoranordnung. Um die Zahl der zu variierenden Parameter zu verringern und dadurch eine zielgerichtete Optimierung zu ermöglichen, kann die N-zählige Radiärsymmetrie in vorteilhafter Weise als Nebenbedingung verwendet werden. Auf diese Weise können weitere erfindungsgemäße Sensoranordnungen, die für einen jeweiligen Anwendungszweck optimiert sind, gewonnen werden.

### Kurze Beschreibung der Zeichnungen

Ausführungsbeispiele der Erfindung sind in den Zeichnungen dargestellt und in der nachfolgenden Beschreibung näher erläutert.

Es zeigen:
Figur 1 ein Beispiel für eine erfindungsgemäße Sensoranordnung mit kreisförmigen Sensorelementen;
Figur 2a bis 2e Beispiele für erfindungsgemäße Sensoranordnungen mit rechteckigen Sensorelementen mit kreisförmiger Empfangsfläche und einem zentralen Sensorelement;
Figur 3a bis 3c weitere Beispiele für erfindungsgemäße Sensoranordnungen mit kreisförmigen Sensorelementen;
Figur 4a bis 4d Beispiele für erfindungsgemäße Sensoranordnungen mit rechteckigen Sensorelementen, ohne zentrales Sensorelement.

### Ausführungsformen der Erfindung

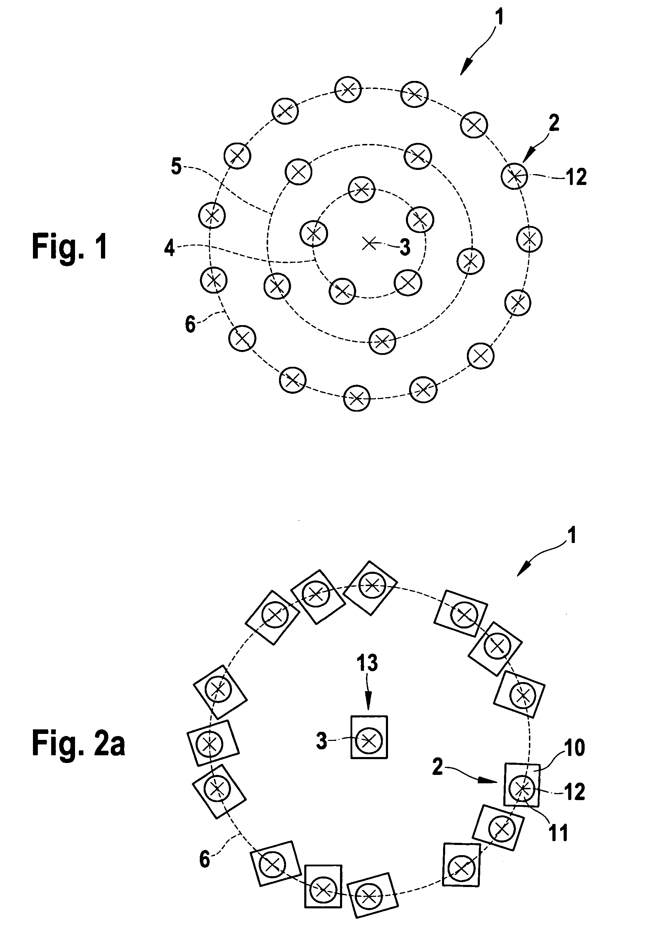

In Fig. 1 ist als Ausführungsbeispiel der Erfindung eine Sensoranordnung 1 mit 25 jeweils kreisförmigen Sensorelementen 2 dargestellt. Diese sind in einer 5-zählig radiärsymmetrischen Figur angeordnet, wobei sich im Symmetriezentrum 3 kein Sensorelement befindet. Auf einem ersten inneren Kreis 4 um das Symmetriezentrum 3 sind, entsprechend dem Grad der Radiärsymmetrie, 5 Sensorelemente angeordnet, auf einem zweiten Kreis 5 sind, jeweils gegenüber den Sensorelementen des ersten Kreises versetzt, ebenfalls 5 Sensorelemente angeordnet. Insgesamt 15 Sensorelemente bilden einen äußeren Kreis 6, wobei die Mittelpunkte 12 der Sensorelemente genau auf dem Kreis 6 angeordnet sind oder auch geringfügig davon abweichen können. Die Kreise 4, 5, 6 sind in Fig. 1 als gestrichelte Linien angedeutet.

Das Sensorarray der Fig. 1 kann beispielsweise einen Durchmesser von ca. 72 mm haben, wobei die Wellenlänge der empfangenen Strahlung hier 7 mm beträgt. In Fig. 1 sind die Sensorelemente symbolisch als kleine Kreise mit geringem Durchmesser dargestellt, die jeweils voneinander beabstandet sind. Die Sensorelemente können jedoch auch größer sein, im Beispiel der Fig. 1 können diese beispielsweise einen Durchmesser von jeweils ca. 12 mm aufweisen und sich untereinander berühren oder nahezu berühren. Die Sensorelemente können in dieser Anordnung somit weitaus größer als die halbe Wellenlänge sein, ohne dass Grating Lobes auftreten.

Die Sensoranordnung nach Fig. 1 hat, verglichen mit einer rechteckigen Sensoranordnung mit der gleichen Zahl von Sensoren und der gleichen Gesamtfläche, eine vergleichbare Winkeltrennfähigkeit und vermeidet Grating Lobes vollständig. Verglichen mit einer kreisförmigen Anordnung von 15 Sensorelementen, die denen auf dem äußeren Kreis entsprechen würde, weist die Sensoranordnung nach Fig. 1 erheblich niedrigere Side Lobes, d. h., ein höheres Signal-Rausch-Verhältnis auf. Die Empfangscharakteristik der Sensoranordnung nach Fig. 1 ist weitgehend unabhängig von der Richtung zum beobachteten Objekt, sowohl bezüglich Winkelabstand von einer senkrecht zur Ebene der Sensoranordnung stehenden Achse als auch azimutal.

Im Ausführungsbeispiel gemäß Fig. 2a bis 2e sind die Sensorelemente 2 jeweils rechteckig, wobei die für die empfangene Strahlung empfindliche Empfangsfläche 11 kreisförmig ausgebildet ist. Innerhalb der Empfangsfläche 11 kann beispielsweise hinter einer Membran ein MEMS-Sensorchip (nicht dargestellt) angeordnet sein, dessen Lötpins und mechanische Befestigung, sowie Vorrichtungen zur Befestigung und Verdrahtung des Sensorelements die Fläche 10 des Sensorelements bestimmen. Wie in Fig. 2a bis 2e gezeigt, muss der Mittelpunkt der Empfangsfläche 11, der hier als Mittelpunkt 12 des Sensorelements bezeichnet wird, nicht unbedingt mit dem Mittelpunkt bzw. Flächenschwerpunkt der Fläche 10 des Sensorelements zusammen fallen.

In den Ausführungsbeispielen nach Fig. 2a bis e sind die Sensorelemente 2 jeweils in einer Figur mit fünfzähliger Radiärsymmetrie angeordnet. Alle Ausführungsbeispiele der Fig. 2a bis e erlauben eine Bildrekonstruktion, die weitgehend richtungsunabhängig ist und insbesondere frei von Mehrdeutigkeiten durch Grating Lobes.

Gemäß Fig. 2a sind 15 Sensorelemente 2 in 5 Gruppen zu je 3 Sensorelementen auf einem äußeren Kreis 6 angeordnet, dessen Mittelpunkt das Symmetriezentrum 3 bildet. Die Sensorelemente sind dadurch, dass der Abstand zwischen den Gruppen größer ist als der zwischen den Sensorelementen innerhalb einer Gruppe, ungleichmäßig auf dem äußeren Kreis 6 verteilt. Die Mittelpunkte der Sensorelemente müssen nicht genau auf dem äußeren Kreis 6 angeordnet sein, sondern können hiervon auch in einer sich in jeder Gruppe wiederholenden Weise abweichen. Im Symmetriezentrum 3 befindet sich ein weiteres, zentrales Sensorelement 13. Die Sensoranordnung der Fig. 2a erlaubt bereits mit relativ wenigen Sensoren eine Bildrekonstruktion mit hoher Winkelauflösung und mit niedrigen Side Lobes.

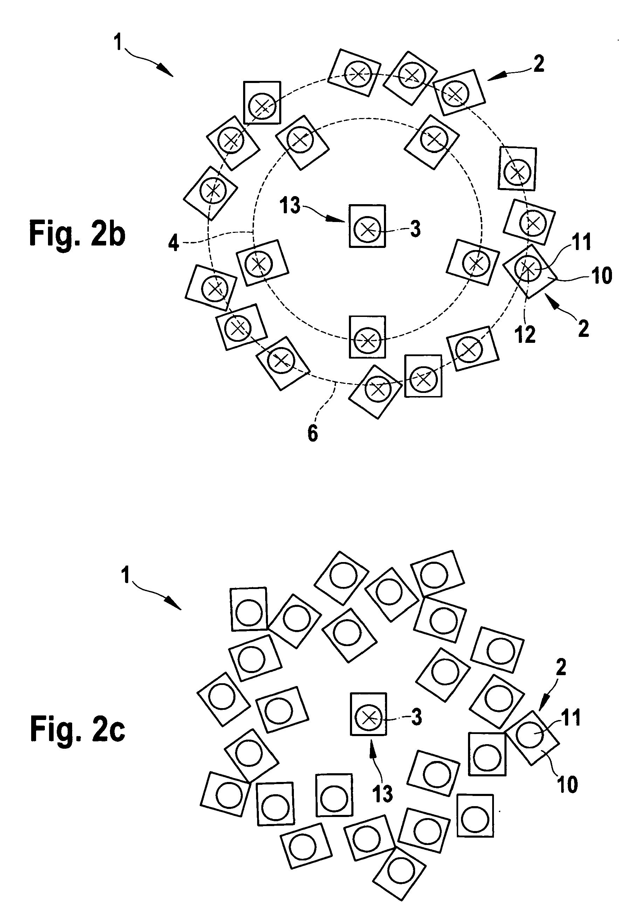

In Fig. 2b sind 21 Sensorelemente 2 derart angeordnet, dass 5 Gruppen zu je 4 Sensorelementen einen äußeren Ring bilden, in dessen Mittelpunkt und Symmetriezentrum 3 sich ein weiteres Sensorelement 12 befindet. Die Sensorelemente jeder Gruppe weisen nicht alle den gleichen Abstand vom Symmetriezentrum 3 auf, insbesondere liegt jeweils ein Sensorelement jeder Gruppe auf einem inneren Kreis 4, während die Mittelpunkte der drei übrigen genau oder nahezu auf einem äußeren Kreis 6 um das Symmetriezentrum 3 liegen. Diese Sensoranordnung bringt gegenüber der der Fig. 2a zwar eine geringfügige Verschlechterung bezüglich Trennschärfe, jedoch eine deutliche Verbesserung im Signal-Rausch-Verhältnis (Side Lobes).

In der Sensoranordnung der Fig. 2c sind 25 Sensorelemente 2 in Form eines äußeren Ringes angeordnet, dessen Mittelpunkt ein weiteres Sensorelement 13 bildet. Die Sensorelemente des äußeren Rings sind hierbei unregelmäßig mit unterschiedlichen Abständen vom Symmetriezentrum 3 angeordnet, jedoch unter Beibehaltung der fünfzähligen Radiärsymmetrie. Die Sensorelemente weisen untereinander Abstände auf, lediglich einige Sensorelemente berühren sich an den Ecken. Bei dieser Sensoranordnung ist gegenüber der gemäß Fig. 2b wiederum die Trennschärfe geringfügig verschlechtert, jedoch das Signal-Rausch-Verhältnis deutlich verbessert.

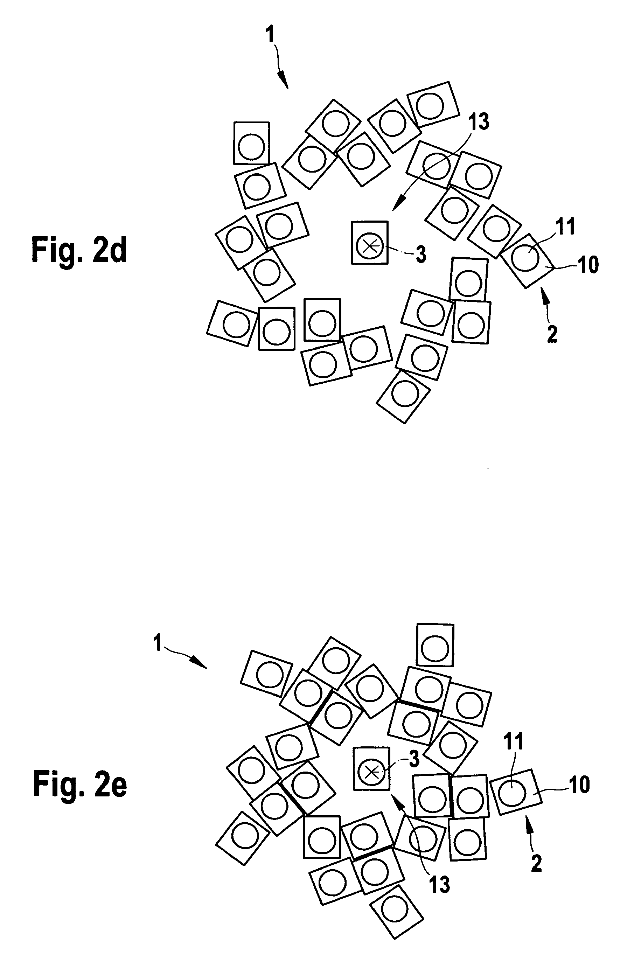

Die Sensoranordnungen der Fig. 2d und 2e weisen gegenüber der der Fig. 2c nochmals niedrigere Side Lobes auf, wobei wiederum eine gewisse Verschlechterung der Winkelauflösung in Kauf genommen werden kann. In beiden Ausführungsbeispielen sind die Sensorelemente des äußeren Rings dichter aneinander angeordnet, so dass sich die diese nahezu berühren. Man erkennt hierbei spiralarmförmige Strukturen, die durch die stellenweise nahezu dichte Packung der Sensorelemente entstehen. Andererseits bleiben größere Flächen unbesetzt, so dass die Belegungsdichte, auch im Bereich des äußeren Rings, noch ungleichmäßiger ist.

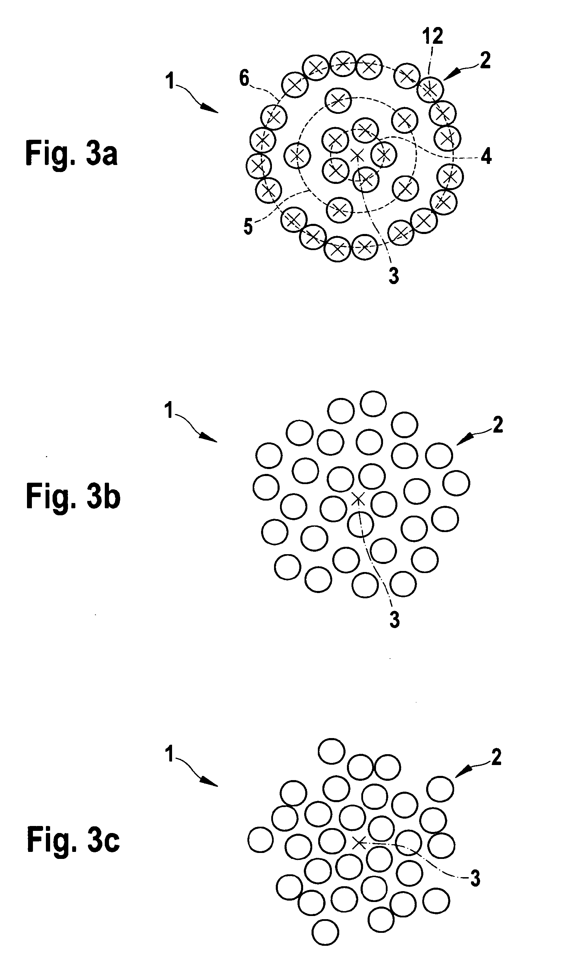

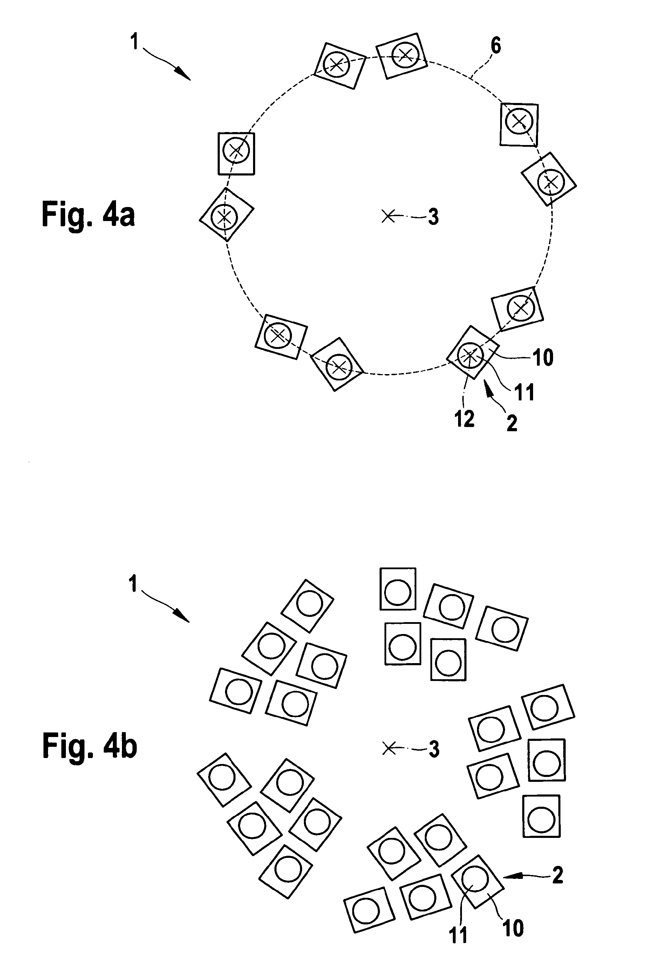

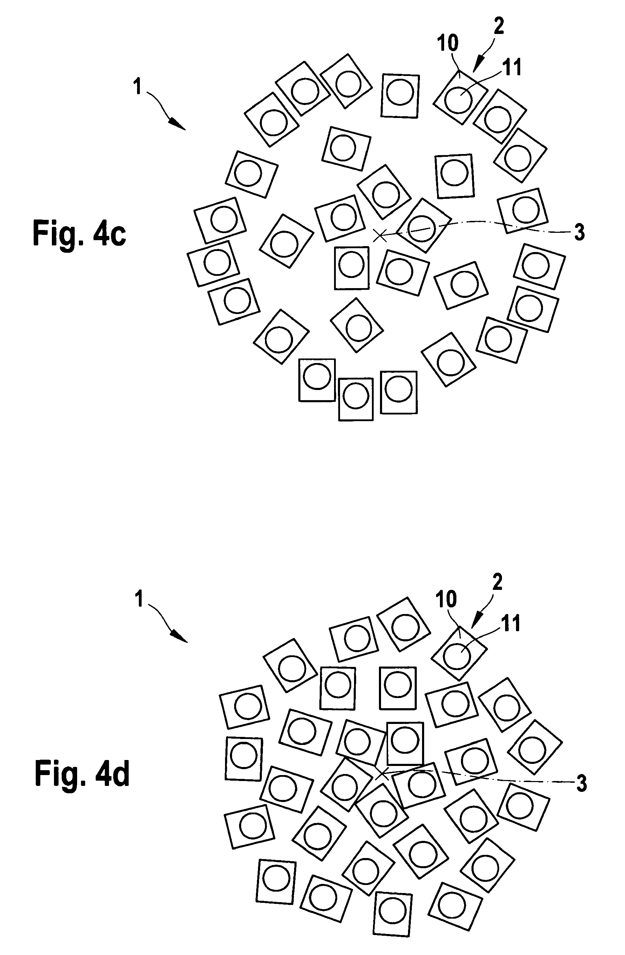

In den Sensoranordnungen der Fig. 3a bis 3c sind jeweils 30 Sensorelemente 2 in einer fünfzählig radiärsymmetrischen Figur angeordnet. Gemäß Fig. 3a ist der Zwischenraum zwischen 5 auf einem inneren Kreis 4 und 20 auf einem äußeren Kreis 6 um das Symmetriezentrum 3 angeordneten Sensorelementen, die sich untereinander berühren oder nahezu berühren, nur mit 5 Sensorelementen und damit lückenhaft belegt. Gemäß Fig. 3b ist die Belegungsdichte gleichmäßig, während gemäß Fig. 3c die Belegungsdichte im äußeren Bereich der Sensoranordnung geringer ist. Fig. 4a bis 4d zeigen Sensoranordnungen mit den rechteckigen Sensoren der Fig. 2 in fünfzähliger Symmetrie, bei denen unter Vorgabe unterschiedlicher Anzahlen von Sensorelementen eine von Fig. 4a zu Fig. 4c zunehmend gleichmäßigere Flächenbelegung mit Sensorelementen realisiert wird. Die Sensoranordnungen der Fig. 3a bis 3c und 4a bis 4d stellen jeweils Optima bei vorgegebener Anzahl von Sensorelementen und unterschiedlicher Gewichtung der Winkelauflösung und des Signal-Rausch-Verhältnisses dar.

## Patentansprüche

1. Verwendung einer Sensoranordnung (1) zum Erfassen einer von einem Objektfeld einfallenden Ultraschallstrahlung in ultraschallgestützten Parkassistenzsystemen, mit einer Mehrzahl von phasenempfindlichen Sensorelementen (2), die jeweils einen Mittelpunkt (12) aufweisen, wobei die Sensorelemente im wesentlichen in einer Ebene angeordnet sind, **dadurch gekennzeichnet, dass** die Mittelpunkte (12) der Sensorelemente bezogen auf ein Symmetriezentrum (3) eine N-zählig radiärsymmetrische Figur bilden, wobei N > 2 ist, und die Ultraschallstrahlung von einer oder mehreren, der Sensoranordnung zugeordneten Strahlungsquellen erzeugt wird.

2. Verwendung einer Sensoranordnung nach Anspruch 1, **dadurch gekennzeichnet, dass** N ungerade ist, insbesondere N = 3 oder N = 5 .

3. Verwendung einer Sensoranordnung nach Anspruch 1 oder 2, **dadurch gekennzeichnet, dass** jeweils N Sensorelemente entlang eines oder mehrerer innerer Kreise (4, 5), in deren Mittelpunkt jeweils das Symmetriezentrum (3) steht, angeordnet sind und mehr als N Sensorelemente entlang eines konzentrischen äußeren Kreises (6) angeordnet sind.

4. Verwendung einer Sensoranordnung nach einem der Ansprüche 1 bis 3, **dadurch gekennzeichnet, dass** es keine in der Ebene liegende Achse gibt, bezüglich derer die Mittelpunkte (12) der Sensorelemente (2) spiegelsymmetrisch angeordnet sind.

5. Verwendung einer Sensoranordnung nach einem der Ansprüche 1 bis 4, **dadurch gekennzeichnet, dass** die Sensorelemente (2) jeweils eine Sensorfläche (10) aufweisen, wobei sich die Flächen einer Mehrzahl von Sensorelementen berühren oder nahezu berühren und die Fläche zumindest eines Sensorelements von keiner Fläche eines anderen Sensorelements berührt oder nahezu berührt wird.

6. Verwendung einer Sensoranordnung nach einem der Ansprüche 1 bis 5, **dadurch gekennzeichnet, dass** im Symmetriezentrum (3) kein Sensorelement vorgesehen ist.

7. Verwendung einer Sensoranordnung nach einem der Ansprüche 1 bis 6, **dadurch gekennzeichnet, dass** mehr als N Sensorelemente entlang eines Kreises angeordnet sind, dessen Mittelpunkt das Symmetriezentrum (3) bildet, derart, dass der Kreis mit den Sensorelementen ungleichmäßig belegt ist.

8. Verwendung einer Sensoranordnung nach einem der Ansprüche 1 bis 7, **dadurch gekennzeichnet, dass** jeweils K Sensorelemente entlang N spiralförmiger Linien angeordnet sind, wobei K > 1 ist.

## Claims

1. Use of a sensor arrangement (1) to detect ultrasonic radiation incident from an object field in ultrasound-assisted parking assistance systems, with a plurality of phase-sensitive sensor elements (2) each having a centre point (12), the sensor elements substantially being arranged in a plane, **characterized in that** the centre points (12) of the sensor elements form an N-fold radially symmetrical figure based on a centre of symmetry (3), where N > 2, and the ultrasonic radiation is generated by one or more radiation sources assigned to the sensor arrangement.

2. Use of a sensor arrangement according to Claim 1, **characterized in that** N is uneven, in particular N = 3 or N = 5.

3. Use of a sensor arrangement according to Claim 1 or 2, **characterized in that** N sensor elements are respectively arranged along one or more inner circles (4, 5), at the centre point of which the centre of symmetry (3) is respectively located, and more than N sensor elements are arranged along a concentric outer circle (6).

4. Use of a sensor arrangement according to one of Claims 1 to 3, **characterized in that** there is no axis in the plane, with respect to which the centre points (12) of the sensor elements (2) are arranged in a mirror-symmetrical manner.

5. Use of a sensor arrangement according to one of Claims 1 to 4, **characterized in that** the sensor elements (2) each have a sensor surface (10), the surfaces of a plurality of sensor elements touching or virtually touching and the surface of at least one sensor element being untouched or virtually untouched by a surface of another sensor element.

6. Use of a sensor arrangement according to one of Claims 1 to 5, **characterized in that** no sensor element is provided in the centre of symmetry (3).

7. Use of a sensor arrangement according to one of Claims 1 to 6, **characterized in that** more than N sensor elements are arranged along a circle, the centre point of which forms the centre of symmetry (3) such that the circle is unevenly occupied by the sensor elements.

8. Use of a sensor arrangement according to one of Claims 1 to 7, **characterized in that** K sensor elements are respectively arranged along N helical lines, where K > 1.

## Revendications

1. Utilisation d'un arrangement de capteurs (1) pour détecter un rayonnement ultrasonique incident depuis un champ d'objet dans des systèmes d'assistance au stationnement à assistance par ultrasons, comprenant une pluralité d'éléments de détection (2) sensibles à la phase qui présentent respectivement un point central (12), les éléments de détection étant pour l'essentiel disposés dans un plan, **caractérisée en ce que** les points centraux (12) des éléments de détection forment par rapport à un centre de symétrie (3) une figure à symétrie radiaire à N éléments, avec N > 2, et le rayonnement ultrasonique est généré par une ou plusieurs sources de rayonnement associées à l'arrangement de capteurs.

2. Utilisation d'un arrangement de capteurs selon la revendication 1, **caractérisée en ce que** N est un nombre impair, notamment N = 3 ou N = 5.

3. Utilisation d'un arrangement de capteurs selon la revendication 1 ou 2, **caractérisée en ce que** N éléments de détection sont à chaque fois disposés le long d'un ou plusieurs cercles intérieurs (4, 5) au point central desquels se trouve à chaque fois le centre de symétrie (3) et plus de N éléments de détection sont disposés le long d'un cercle extérieur (6) concentrique.

4. Utilisation d'un arrangement de capteurs selon l'une des revendications 1 à 3, **caractérisée en ce qu'**il n'existe pas d'axe se trouvant dans le plan par rapport auquel les points centraux (12) des éléments de détection (2) sont disposés selon une symétrie en miroir.

5. Utilisation d'un arrangement de capteurs selon l'une des revendications 1 à 4, **caractérisée en ce que** les éléments de détection (2) présentent à chaque fois une surface de détection (10), les surfaces d'une pluralité d'éléments de détection se touchant ou se touchant presque et la surface d'au moins un élément de détection n'étant touchée ou presque touchée par aucune surface d'un autre élément de détection.

6. Utilisation d'un arrangement de capteurs selon l'une des revendications 1 à 5, **caractérisée en ce qu'**aucun élément de détection n'est prévu au centre de symétrie (3).

7. Utilisation d'un arrangement de capteurs selon l'une des revendications 1 à 6, **caractérisée en ce que** plus de N éléments de détection sont disposés le long d'un cercle dont le point central forme le centre de symétrie (3) de telle sorte que le cercle est occupé de manière irrégulière par les éléments de détection.

8. Utilisation d'un arrangement de capteurs selon l'une des revendications 1 à 7, **caractérisée en ce que** K éléments de détection sont à chaque fois disposés le long de N lignes en forme de spirale, avec K > 1.
